# EUROPEAN PATENT SPECIFICATION

(11) **EP 0 807 666 B1**
(45) Date of publication and mention of the grant of the patent: **16.01.2002**
(21) Application number: 97303223.8
(22) Date of filing: 12.05.1997
(51) Int. Cl.: C08L 79/00, C08L 61/20, C08L 77/00, C08G 73/00, C08G 12/08, C08G 12/06, C08K 13/00

(54) **Composite material of liquid crystal polyazomethine or copolyazomethine**
Zusammengesetztes Material enthaltend flüssigkristallines Polyazomethin oder Copolyazomethin
Matériau composite contenant des polyazométhines ou des copolyazométhines à structure de cristaux

(30) Priority: 17.05.1996 JP 14823496; 03.04.1997 JP 10088897
(43) Date of publication of application: 19.11.1997
(73) Proprietor: HONDA GIKEN KOGYO KABUSHIKI KAISHA, Minato-ku, Tokyo 107 (JP)
(72) Inventor: Kagawa, Kazuhiro, 4-1 Chuo-1-chome, Wako-shi, Saitama-ken (JP); Hattori, Tatsuya, 4-1 Chuo-1-chome, Wako-shi, Saitama-ken (JP); Matsumoto, Keizo, 4-1 Chuo-1-chome, Wako-shi, Saitama-ken (JP); Iguchi, Masaru, 4-1 Chuo-1-chome, Wako-shi, Saitama-ken (JP)
(74) Representative: Matthews, Derek Peter

(56) References cited:
- EP-A- 0 322 943
- EP-A- 0 408 166
- EP-A- 0 700 972
- EP-A- 0 750 016
- PATENT ABSTRACTS OF JAPAN vol. 096, no. 003, 29 March 1996 & JP 07 292261 A (TORAY IND INC), 7 November 1995,

## Description

### BACKGROUND OF THE INVENTION

The present invention relates to a composite material comprising a liquid crystal polyazomethine or copolyazomethine, a polyamide and an inorganic filler.

Liquid crystal polymers such as liquid crystal polyesters, liquid crystal polyazomethines, etc. have been developed as polymers having excellent mechanical strength, and various improvements have been proposed. Though these liquid crystal polymers have excellent mechanical strength, there is still room for improving their bending strength. Particularly, polyazomethines are promising as reinforcing resins for composite materials because of good mechanical strength. The details of polyazomethines are described in U. S. Patent 4,048,148. To exhibit the properties of these liquid crystal polyazomethines, they should sufficiently be oriented. However, since the orienting of the liquid crystal polyazomethines at the time of forming makes the resultant formed products anisotropic, the liquid crystal polyazomethines can be used only for limited applications. Further, because the liquid crystal polyazomethines per se are brittle, lacking in toughness, and water-absorptive, they are easily deteriorated.

Accordingly, various composite materials with improved mechanical strength have been proposed by blending these liquid crystal polymers with other polymers.

With respect to composite materials of liquid crystal polyesters, Japanese Patent Laid-Open No. 1-320128 discloses a method for manufacturing a formed product of a composition of a thermoplastic resin and a liquid crystal polymer such as a liquid crystal polyester, comprising the steps of extruding the composition at a liquid crystal transition temperature or higher while stretching the resultant rod-shaped extrudate, cutting the rod-shaped extrudate at a constant interval, and extruding it at a liquid crystal transition temperature or lower. Also, Japanese Patent Laid-Open No. 2-53860 discloses a method for producing a liquid crystal polymer composition, comprising the steps of blending a liquid crystal polymer such as a liquid crystal polyester and a matrix polymer at a temperature at which the liquid crystal polymer is not deformed, and heat-treating the resulting blend at a temperature ranging from a liquid crystal-melting point to a temperature lower than the liquid crystal-melting point by 40°C. However, the composite materials produced by these methods are still insufficient in mechanical strength, particularly bending strength.

Japanese Patent Laid-Open No. 5-86286 discloses a composite resin composition comprising a liquid crystal polyester and a nylon matrix resin. However, this composite resin composition is not necessarily sufficient in mechanical strength such as bending strength and flexural modulus. Also, when it is injection-molded, it exhibits anisotropy in mechanical strength depending on the injection direction.

Japanese Patent Laid-Open No. 6-172619 discloses a liquid crystal resin composition comprising a liquid crystal polyester as a liquid crystal polymer, and pitch-type carbon fibers and fillers. This resin composition does not show improved anisotropy, while it is excellent in slidability and plane impact strength.

Similarly, Japanese Patent Laid-Open No. 7-292261 discloses a liquid crystal resin composition comprising a liquid crystal polyester as a liquid crystal polymer, and a thermoplastic resin and/or an inorganic filler. This resin composition is still insufficient in mechanical strength because of the inclusion of the liquid crystal polyester, while it is improved in anisotropy.

With respect to the liquid crystal polyazomethine, U. S. Patent No. 5,223,584 discloses a composite material comprising a rigid rod-shaped polymer consisting of polyazomethine, etc. and an epoxy matrix polymer. Though this composite material shows good mechanical strength, it is disadvantageous in that it cannot be injection-molded because it contains a thermosetting resin as a matrix polymer.

Attempts have been conducted to provide polymer alloys with excellent injection-moldability by blending liquid crystal polyazomethines with polyamides as thermoplastic resins. For instance, Japanese Patent Laid-Open No. 3-51118 discloses a composite material obtained by dispersing a precursor of a liquid crystal polyazomethine in a precursor of a matrix polymer, causing the reaction of the liquid crystal polyazomethine precursor to form a liquid crystal polyazomethine in situ, and then polymerizing the precursor of a matrix polymer. However, sufficient dispersion cannot be achieved between the liquid crystal polyazomethine and the polyamide, failing to provide a composite material with good properties.

EP-A-0700972 (to Honda Giken KKK) discloses a molecular composite material comprising a liquid crystal polymer, a thermoplastic polymer and a compatibilizing agent, but no inorganic filler. EP-A-0750016 (to Honda Giken KKK) discloses a molecular composite material comprising a liquid crystal polyazomethine or its copolymer and a thermoplastic polymer, but no inorganic filler.

It has also been found that injection moldings of a composite material of a liquid crystal polyazomethine and a polyamide show a large anisotropy, and that good welding strength which is required for thermoplastic composite materials containing a liquid crystal polyazomethine cannot be achieved simply by mixing a liquid crystal polyazomethine and a polyamide resin.

### OBJECT AND SUMMARY OF THE INVENTION

Accordingly, an object of the present invention is to provide a composite material based on a liquid crystal polyazomethine or copolyazomethine and a polyamide which shows decreased anisotropy without lowering mechanical strength and has good welding strength.

As a result of research in view of the above object, it has been found that by mixing a composition of a liquid crystal polyazomethine or copolyazomethine and a polyamide with an inorganic filler, it is possible to obtain a composite material having excellent mechanical strength and welding strength with reduced anisotropy. The present invention has been completed based on this finding.

The composite material according to the present invention comprises a liquid crystal polyazomethine or copolyazomethine, a polyamide and an inorganic filler. The amount of the liquid crystal polyazomethine or copolyazomethine is 10-90 weight %, the amount of the polyamide is 90-10 weight %, and the amount of the inorganic filler is 5-15 parts by weight per the total amount (100 parts by weight) of the liquid crystal polyazomethine or copolyazomethine and the polyamide.

### BRIEF DESCRIPTION OF THE DRAWINGS

Fig. 1 is a plan view showing a test piece for measuring the welding strength of the composite material of the present invention;
Fig. 2 is a graph showing the relations between the welding strength of the composite materials obtained in Examples 7 and 8 and the amount of the inorganic filler; and
Fig. 3 is a graph showing the relations between the welding strength of the composite materials obtained in Examples 10 and 11 and the blending time T₂ of the inorganic filler.

### DETAILED DESCRIPTION OF THE PREFERRED EMBODIMENTS

The present invention will be explained in detail below.

### [1] Composite material

### (1) Liquid crystal polyazomethine or copolyazomethine

### (a) Structure of liquid crystal polyazomethine or copolyazomethine

The liquid crystal polyazomethine (homopolymer) is represented, for instance, by the following general formula: 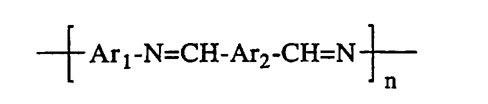 wherein Ar₁ and Ar₂ are aromatic residual groups, and n is an integer.

The liquid crystal copolyazomethine (copolymer) is represented, for instance, by the following general formula: 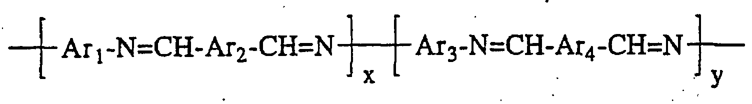 wherein Ar₁, Ar₂, Ar₃ and Ar₄ are aromatic residual groups, and x and y are integers.

In either of the above polyazomethine and copolyazomethine, the aromatic residual groups Ar₁, Ar₂, Ar₃ and Ar₄ are preferably substituted or unsubstituted phenylene or biphenylene groups. The substituent groups attached to the phenylene or biphenylene groups may be alkyl groups having preferably 1-5 carbon atoms, alkoxy groups having preferably 1-5 carbon atoms, a hydroxyl group or halogen groups.

The specific examples of the polyazomethine (homopolymer) may be as follows: 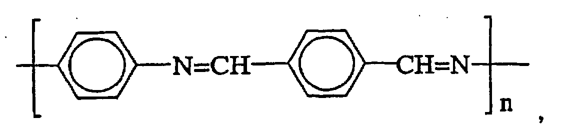 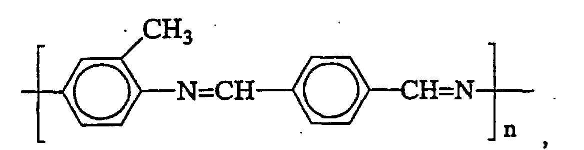 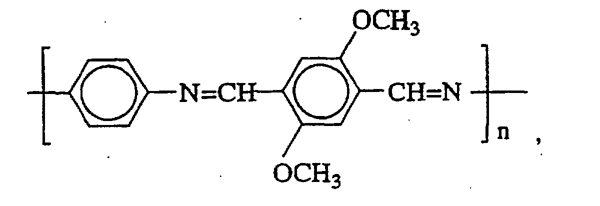 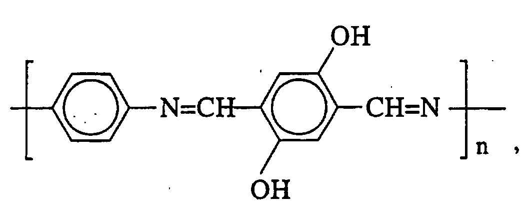 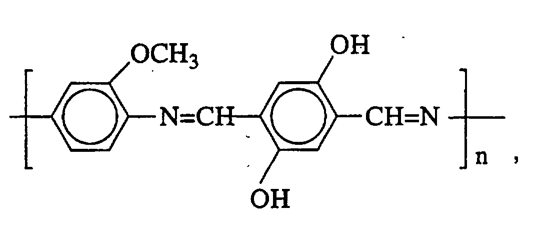 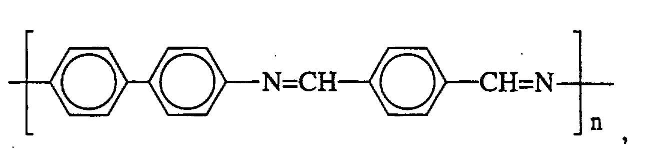 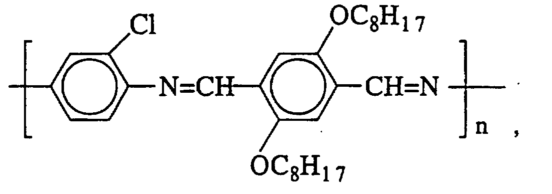 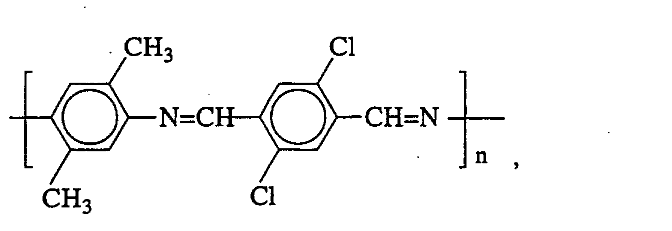 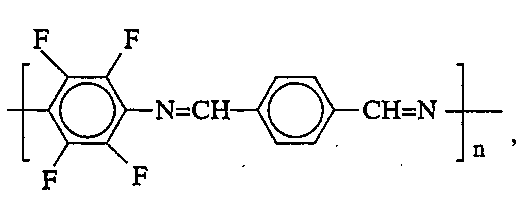 and 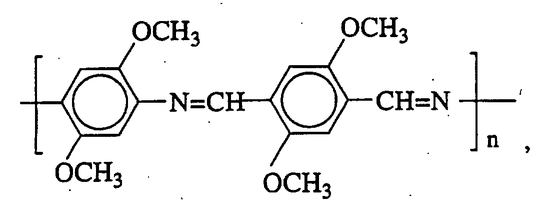 wherein n is an integer.

The specific examples of the copolyazomethines may be as follows: 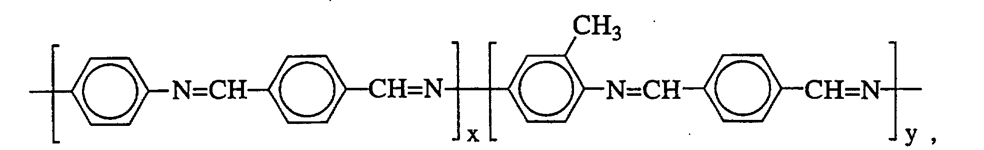 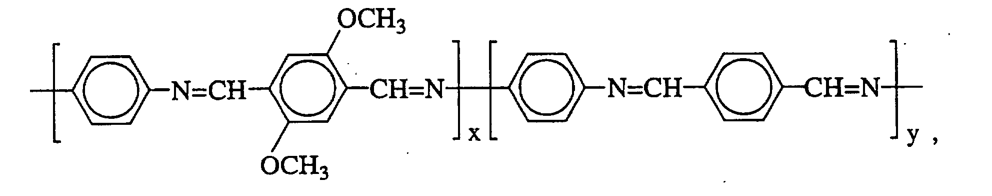 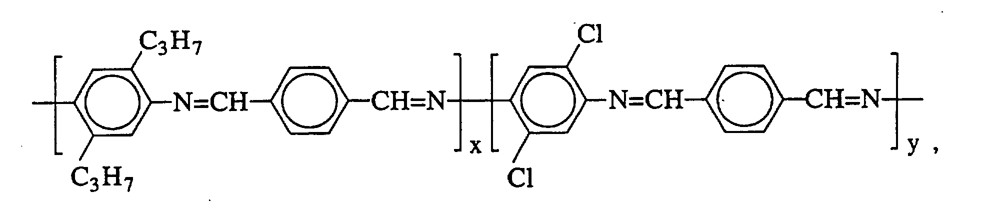 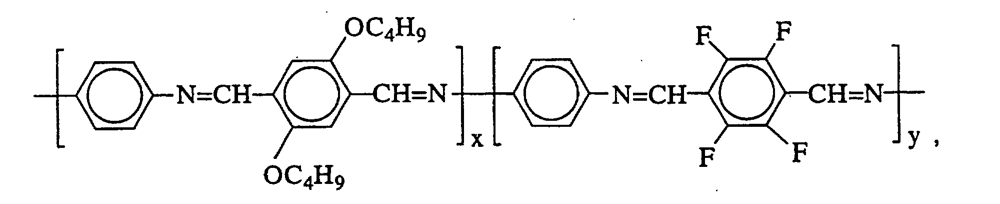 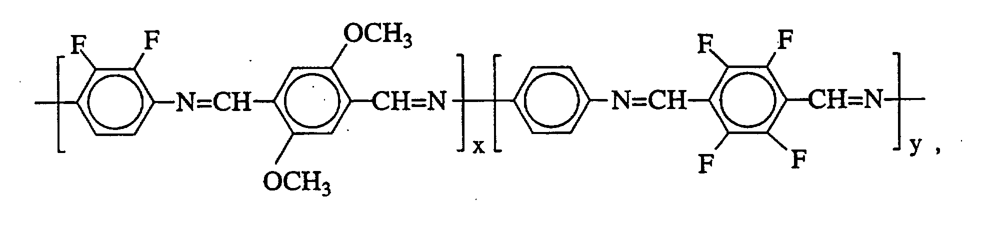 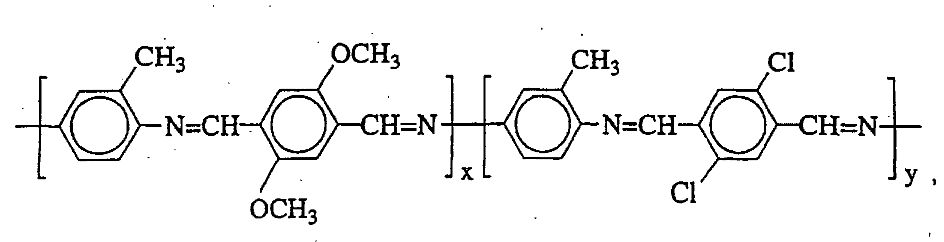 wherein x and y are integers.

Since the explanation of the liquid crystal polyazomethine is essentially applicable to the liquid crystal copolyazomethine, specific explanation with respect to the liquid crystal copolyazomethine may be omitted in some cases. In such cases, it should be noted that specific explanation with respect to the liquid crystal polyazomethine (homopolymer) applies to the liquid crystal copolyazomethine as it is.

### (b) Production of liquid crystal polyazomethine

The liquid crystal polyazomethine or copolyazomethine may be formed by polymerizing aromatic diamine and aromatic dialdehyde. The preferred aromatic diamines are substituted or unsubstituted p-phenylene diamines, and the preferred aromatic dialdehydes are substituted or unsubstituted terephthalaldehyde.

Examples of the substituted phenylene diamines are p-tolylenediamine and 2-chloroparaphenylene diamine. The production method of liquid crystal polyazomethine itself is known in the art as disclosed in U. S. Patent No. 4,048,148.

A typical production method of the liquid crystal polyazomethine is as follows: Aromatic diamine, N-methyl-2-pyrrolidone and lithium carbonate are introduced into a three-necked flask and stirred, and terephthalaldehyde is added and stirred for 0.5-6 hours. To keep sufficient stirring, an appropriate amount of N-methyl-2-pyrrolidone is preferably added in the course of reaction. Thereafter, p-aminoacetanilide is added and further stirred for 16-48 hours. After completion of the reaction, the resultant reaction product is washed with water and methanol several times and then vacuum-dried at about 80°C to obtain the liquid crystal polyazomethine or copolyazomethine.

### (c) Properties of liquid crystal polyazomethine or copolyazomethine

The liquid crystal polyazomethine or copolyazomethine has an average molecular weight of 3,000-100,000 and a logarithmic viscosity number of 0.5-2.5 dl/g at 30°C in sulfuric acid, more preferably 1.0-2.0 dl/g. When the average molecular weight of the liquid crystal polyazomethine or copolyazomethine is less than 3,000, the resultant composite material has insufficient strength. On the other hand, when the average molecular weight exceeds 100,000, the liquid crystal polyazomethine or copolyazomethine shows too large melt viscosity, resulting in poor formability in the resultant composite material.

### (2) Polyamide

The polyamides used in the present invention may be aliphatic, aromatic or partly aromatic polyamides or copolyamides. The polyamides or copolyamides may simply be called "polyamides" herein. The preferred polyamides are aliphatic, aromatic or partly aromatic nylons. The aliphatic, aromatic or partly aromatic polyamides or copolyamides may be used alone or in combination. One example of the preferred nylon is an aliphatic polyamide constituted by structural units represented by the following general formula: 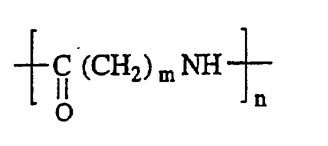 wherein m is an integer of 1-12, and n is an integer. Particularly preferable as such aliphatic polyamide is nylon 6. The polyamide functions to reduce the anisotropy of the composite material, thereby providing the composite material with excellent mechanical properties.

In the present invention, it is preferable to use industrial-grade nylon. Such industrial-grade nylon may be 1018I nylon 6 or 1022B nylon 6 (available from Ube Industries, Ltd.), or MX nylon (partly aromatic nylon available from Mitsubishi Gas Chemical Company, Inc.). The term "industrial grade" used herein means that nylon is commonly used for various industrial applications such as injection moldings, or fibers. The industrial-grade nylon may contain small amounts of low-molecular weight polyamide components.

The polyamide has an average molecular weight of 5,000-100,000. When the average molecular weight of the polyamide is less than 5,000, the resultant composite materials have poor mechanical strength. On the other hand, when the average molecular weight of the polyamide exceeds 100,000, the polyamide has too high melt viscosity, resulting in poor formability in the resultant composite material.

### (3) Inorganic filler

The inorganic filler functions to reduce the anisotropy of the composite material. The preferred examples of the inorganic fillers include glass fibers, carbon fibers, aromatic polyamide fibers, potassium titanate whisker, gypsum fibers, brass fibers, stainless steel fibers, steel fibers, ceramic fibers, boron whisker, mica, graphite, talc, silica, calcium carbonate, glass beads, glass flakes, glass microballoon, clay, wollastonite, or titanium oxide, which may be in the form of fiber, powder, granule or flake. Particularly preferable among them are glass fibers, carbon fibers, potassium titanate whisker, talc, mica and wollastonite.

When the inorganic filler is in the form of fiber, its average diameter is 1-10 µm, preferably 5-8 µm. When the inorganic filler is in the form of powder, its average diameter is 3-10 µm, preferably 4-8 µm. In any case, when the average diameter of the inorganic filler is lower than the above lower limit, sufficient effects of reducing the anisotropy of the composite material cannot be achieved. On the other hand, when the average diameter of the inorganic filler exceeds the above upper limit, the composite material becomes uneven.

### [2] Production of composite material

### (1) Blending ratio

The composite material of the present invention may be produced by blending the liquid crystal polyazomethine or copolyazomethine, the polyamide and the inorganic filler at a uniform temperature. A weight ratio of the liquid crystal polyazomethine or copolyazomethine to the polyamide is 10:90-90:10, particularly 30:70-85:15. When the amount of the liquid crystal polyazomethine or copolyazomethine is less than 10 weight %, the liquid crystal polyazomethine or copolyazomethine fails to sufficiently reinforce the resultant composite material. On the other hand, when the amount of the liquid crystal polyazomethine or copolyazomethine exceeds 90 weight %, the resultant composite material undesirably shows brittleness.

The amount of the inorganic filler is 5-15 parts by weight, preferably 8-12 parts by weight per the total amount (100 parts by weight) of the liquid crystal polyazomethine or copolyazomethine and the polyamide. When the amount of the inorganic filler is less than 5 parts by weight, sufficient effects of lowering the anisotropy of the composite material cannot be achieved. On the other hand, when the amount of the inorganic filler exceeds 15 parts by weight, the composite material becomes brittle.

### (2) Blending apparatus

The blending apparatus usable for the production of the composite materials according to the present invention may preferably be a continuous blending/reaction apparatus such as a single-screw extruder, a twin-screw extruder or a multi-screw extruder. Particularly preferable as the continuous blending/reaction apparatus is a twin-screw extruder because of high blending power. The term "continuous blending/reaction" used herein means that blending of component polymers is carried out continuously, simultaneously causing a reaction therebetween.

### (3) Blending temperature

The blending temperature which may be changeable depending on the types of the liquid crystal polyazomethine or copolyazomethine and the polyamide is generally equal to or higher than the highest melting point of the components (liquid crystal polyazomethine or copolyazomethine and polyamide) and lower than the lowest decomposition temperature of the components.

The blending temperature is preferably 250-320°C, more preferably 260-290°C. When the blending temperature is lower than 250°C, the liquid crystal polyazomethine or copolyazomethine and the polyamide are not well dissolved in each other. On the other hand, when the blending temperature exceeds 320°C, the constituent polymers are likely to be decomposed.

### (4) Blending time

The liquid crystal polyazomethine or copolyazomethine, the polyamide and the inorganic filler may be introduced into the blending apparatus simultaneously or successively in an arbitrary order. In a preferred embodiment, the inorganic filler is added after the liquid crystal polyazomethine or copolyazomethine and the polyamide are blended in the blending apparatus for 0.5-10 minutes.

The blending time of the liquid crystal polyazomethine or copolyazomethine, the polyamide and the inorganic filler which may be changeable depending on their types is preferably 0.5-60 minutes, more preferably 5-60 minutes. When the blending time is shorter than 0.5 minutes, sufficient blending cannot be achieved. On the other hand, when the blending time exceeds 60 minutes, the number of double bonds in the liquid crystal polyazomethine or copolyazomethine decreases, resulting in decreased liquid crystallinity. The particularly preferred blending time is about 5-20 minutes.

### (5) Injection-molding

The composite material of the present invention is preferably produced by an injection-molding method. The anisotropy of the resultant moldings is expressed by a ratio (MD/TD) of the flexural modulus or bending strength in an injection direction (MD) to the flexural modulus or bending strength in a transverse direction (TD). The MD/TD ratio is preferably less than 3.60 in the case of the flexural modulus, while it is preferably less than 2.20 in the case of the bending strength.

According to the present invention, the addition of the inorganic filler to a composite material of the liquid crystal polyazomethine or copolyazomethine and the polyamide serves not only to reduce the anisotropy of the composite material without lowering the mechanical strength of the composite material, but also to improve the welding strength thereof.

The present invention will be explained in further detail by the following Examples without intention of restricting the scope of the present invention defined by the claims attached hereto.

### Example 1

35.9 g of a liquid crystal polyazomethine ("TU-100," available from Toto Kagaku Kogyo, K.K.) was dry-blended with 18.1 g of carbon fiber-reinforced nylon 6 ("1001-15A," available from Toray Industries, Inc., carbon fiber content: 15 weight %) and 2.42 g of carbon fibers ("T006-006," available from Toray Industries, Inc., average diameter: 7 µm). The resultant blend was charged into a chamber of a laboratory-type twin-screw plasto-mill (available from Toyo Seiki K.K.) rotating at 80 rpm to carry out melt blending at 280°C. After it passed 15 minutes, the rotation was stopped to withdraw a melt-blended resin composition, which was then injection-molded to provide flat test pieces of 40 mm x 40 mm x 1.5 mm by a small injection molding machine.

Three-point bending test was conducted using an autograph on each flat test piece to measure a bending strength and a flexural modulus thereof in both injection direction (MD) and transverse direction (TD). The percentages of the components (liquid crystal polyazomethine, nylon 6 and carbon fibers) in the composite material are shown in Table 1, and the bending test results are shown in Table 2.

### Example 2

37.8 g of a liquid crystal polyazomethine ("TU-100," available from Toto Kagaku Kogyo, K.K.) was melt-blended with 8.87 g of nylon 6 ("1022B," available from Ube Industries, Ltd.) and 13.33 g of carbon fiber-reinforced nylon 6 ("10015GC9," available from Ube Industries, Ltd., carbon fiber content: 45 weight %). The blend was then injection-molded to provide flat test pieces for three-point bending tests in the same manner as in Example 1. The percentages of the components in the composite material are shown in Table 1, and the bending test results are shown in Table 2.

### Example 3

37.8 g of a liquid crystal polyazomethine ("TU-100," available from Toto Kagaku Kogyo, K.K.) was melt-blended with 16.2 g of nylon 6 ("1022B," available from Ube Industries, Ltd.) and 6.0 g of wollastonite ("WIC 10 PA," available from Kinseimatecs K.K., average diameter: 1 µm, surface-treated for nylon 6). The blend was then injection-molded to provide flat test pieces for three-point bending tests in the same manner as in Example 1. The percentages of the components in the composite material are shown in Table 1, and the bending test results are shown in Table 2.

### Example 4

37.8 g of a liquid crystal polyazomethine ("TU-100," available from Toto Kagaku Kogyo, K.K.) was melt-blended with 7.2 g of nylon 6 ("1022B," available from Ube Industries, Ltd.) and 15.0 g of potassium titanate whisker-reinforced nylon 6 ("Poticon NT18N," available from Ohtsuka Kagaku K.K., potassium titanate whisker content: 40 weight %, nylon 6 content: 60 weight %). The blend was then injection-molded to provide flat test pieces for three-point bending tests in the same manner as in Example 1. The percentages of the components in the composite material are shown in Table 1, and the bending test results are shown in Table 2.

### Example 5

37.8 g of a liquid crystal polyazomethine ("TU-100," available from Toto Kagaku Kogyo, K.K.) was melt-blended with 16.2 g of nylon 6 ("1022B," available from Ube Industries, Ltd.) and 6.0 g of talc ("PKP-80," available from Fuji Talc Kogyo K.K., average diameter: 5-6 µm). The blend was then injection-molded to provide flat test pieces for three-point bending tests in the same manner as in Example 1. The percentages of the components in the composite material are shown in Table 1, and the bending test results are shown in Table 2.

### Example 6

37.8 g of a liquid crystal polyazomethine ("TU-100," available from Toto Kagaku Kogyo, K.K.) was melt-blended with 7.2 g of nylon 6 ("1022B," available from Ube Industries, Ltd.) and 15.0 g of mica-reinforced nylon 6 ("240-MI," available from Kuraray Co., Ltd., mica content: 40 weight %). The blend was then injection-molded to provide flat test pieces for three-point bending tests in the same manner as in Example 1. The percentages of the components in the composite material are shown in Table 1, and the bending test results are shown in Table 2.

### Comparative Example 1

42.0 g of a liquid crystal polyazomethine ("TU-100," available from Toto Kagaku Kogyo, K.K.) was melt-blended with 18.0 g of nylon 6 ("1022B," available from Ube Industries, Ltd.), and then injection-molded to provide flat test pieces for three-point bending tests in the same manner as in Example 1. The percentages of the components in the composite material are shown in Table 1, and the bending test results are shown in Table 2.

**Table 1**

| | Example No. | | | | | | Com. Ex. No. |
|---|---|---|---|---|---|---|---|
| Component | 1 | 2 | 3 | 4 | 5 | 6 | 1 |
| Polyazomethine⁽¹⁾ | 70.0 | 70.0 | 70.0 | 70.0 | 70.0 | 70.0 | 70.0 |
| Nylon 6⁽¹⁾ | 30.0 | 30.0 | 30.0 | 30.0 | 30.0 | 30.0 | 30.0 |
| Inorganic Filler⁽²⁾ | | | | | | | |
| Carbon Fibers | 10.0 | - | - | - | - | - | - |
| Glass Fibers | - | 11.1 | - | - | - | - | - |
| Wallostonite | - | - | 11.1 | - | - | - | - |
| Whisker⁽³⁾ | - | - | - | 11.1 | - | - | - |
| Talc | - | - | - | - | 11.1 | - | - |
| Mica | - | - | - | - | - | 11.1 | - |

| | | | | | | | |
|---|---|---|---|---|---|---|---|
| Note (1) Unit: weight %. | | | | | | | |
| (2) Parts by weight per the total amount (100 parts by weight) of liquid crystal polyazomethine and nylon 6. | | | | | | | |
| (3) Potassium titanate whisker. | | | | | | | |

**Table 2**

| | Bending Strength (kgf/mm²) | | | Flexural Modulus (kgf/mm²) | | |
|---|---|---|---|---|---|---|
| No. | MD | TD | MD/TD | MD | TD | MD/TD |
| Example 1 | 18.85 | 12.13 | 1.55 | 1436.40 | 679.58 | 2.11 |
| Example 2 | 17.15 | 8.39 | 2.04 | 1320.20 | 424.54 | 3.11 |
| Example 3 | 17.80 | 10.56 | 1.69 | 1315.75 | 390.83 | 3.37 |
| Example 4 | 17.50 | 8.64 | 2.03 | 1460.35 | 415.51 | 3.51 |
| Example 5 | 15.55 | 7.31 | 2.13 | 1144.25 | 415.55 | 2.75 |
| Example 6 | 16.95 | 8.11 | 2.09 | 1278.50 | 408.08 | 3.13 |
| Com. Ex. 1 | 13.55 | 5.65 | 2.40 | 1185.00 | 315.50 | 3.76 |

As is clear from Table 2, the composite materials of Examples 1-6 containing various inorganic fillers showed smaller MD/TD ratios in both bending strength and flexural modulus than those of Comparative Example 1 containing no inorganic filler, indicating that the composite materials of Examples 1-6 have reduced anisotropy. Particularly when the inorganic filler is in the form of fiber (Examples 1 and 2), large effects of reducing the anisotropy was obtained.

### Example 7

A liquid crystal polyazomethine ("TU-100," available from Toto Kagaku Kogyo, K.K.) was dry-blended with nylon 6 ("1022B," available from Ube Industries, Ltd.) in amounts shown in Table 3 (weight ratio of liquid crystal polyazomethine/nylon 6: 7:3). The resultant blend was charged into a chamber of a laboratory-type twin-screw plasto-mill (available from Toyo Seiki K.K.) rotating at 100 rpm to carry out melt blending at 270°C for 10 minutes. Thereafter added to the blend was glass fibers ("CS 3PE-324," available from Nitto Boseki Co., Ltd., average diameter: 6 µm) in an amount shown in Table 3 [expressed by parts by weight per the total amount (100 parts by weight) of the liquid crystal polyazomethine and nylon 6]. Melt blending was carried out for 10 minutes after the addition of the glass fibers. The rotation of the twin-screw plasto-mill was stopped to withdraw a melt-blended resin composition, which was then injection-molded to provide flat test pieces of 40 mm x 40 mm x 1.5 mm by a manual-type simple injection molding machine.

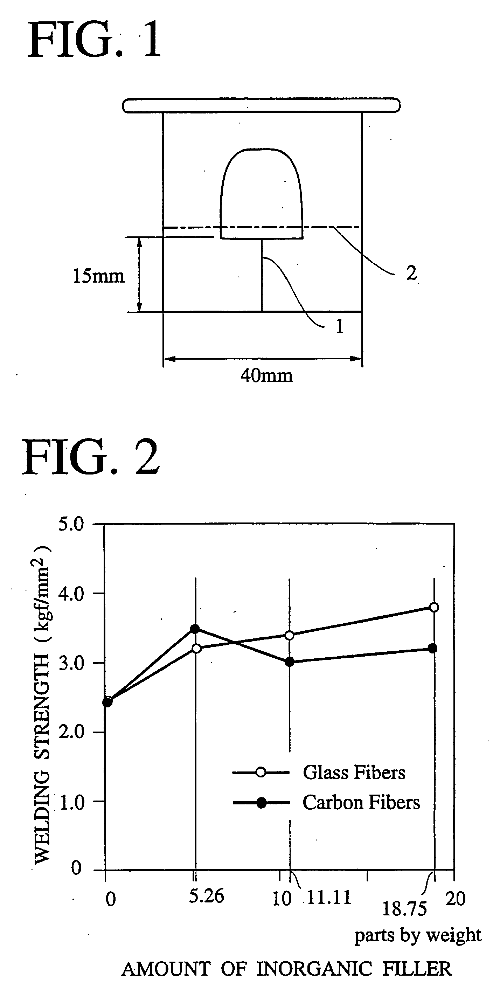

Three-point bending test was conducted using an autograph on each flat test piece to measure a bending strength and a flexural modulus thereof in both injection direction (MD) and transverse direction (TD). The percentages of the components in the composite material are shown in Table 3, and the bending test results are shown in Table 4. Also, test pieces shown in Fig. 1 were cut from the flat test pieces to measure a welding strength. In Fig. 1, 1 represents a slit along which welding is carried out, and 2 represents a line along which each test piece is cut. The measurement results are shown in Table 4 and Fig. 2.

**Table 3**

| | Test Piece No. | | | |
|---|---|---|---|---|
| Component | 7-1 | 7-2 | 7-3 | 7-4 |
| Polyazomethine⁽¹⁾ | 2.0 | 39.9 | 37.8 | 33.6 |
| Nylon 6⁽¹⁾ | 18.0 | 17.1 | 16.2 | 14.4 |
| Glass Fibers⁽¹⁾ | 0.0 | 3.0 | 6.0 | 9.0 |
| Percentage of GF⁽²⁾ | 0.0 | 5.26 | 11.11 | 18.75 |

| | | | | |
|---|---|---|---|---|
| Note (1) Unit: g. | | | | |
| (2) Parts by weight of glass fibers per 100 parts by weight of liquid crystal polyazomethine + and nylon 6. | | | | |

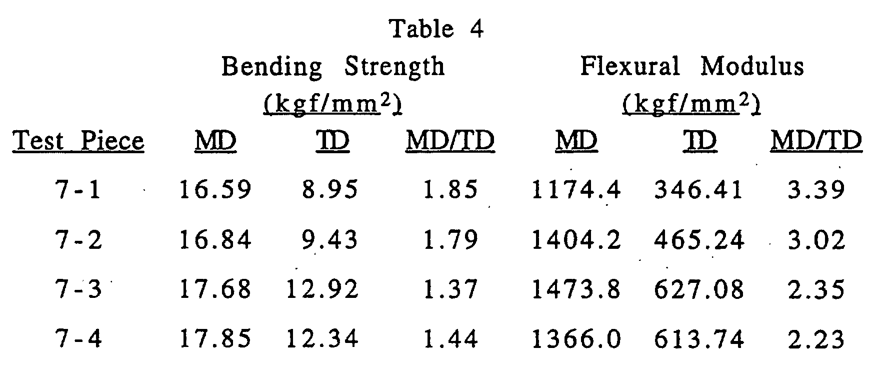

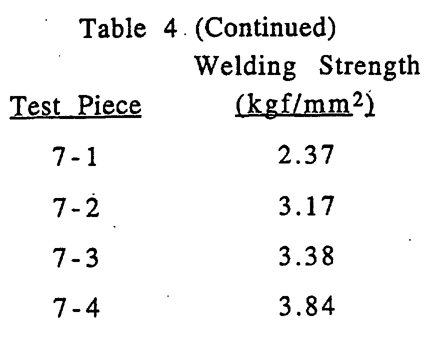

As is clear from Table 4, the composite materials tend to have higher bending strength and flexural modulus as well as a smaller anisotropy (MD/TD) by the addition of the glass fibers as an inorganic filler. Also, as the amount of the inorganic filler added increases, the welding strength of the composite material tends to increase.

### Example 8

Flat test pieces of 40 mm x 40 mm x 1.5 mm were injection-molded in the same manner as in Example 7 except for adding carbon fibers (Toreca T010, available from Toray Industries, Inc., average diameter: 7 µm) as an inorganic filler. Three-point bending test was conducted using an autograph on each flat test piece to measure a bending strength and a flexural modulus thereof in both injection direction (MD) and transverse direction (TD). The percentages of the components in the composite material are shown in Table 5, and the bending test results are shown in Table 6. Also, test pieces shown in Fig. 1 were cut from the flat test pieces to measure a welding strength. The measurement results are shown in Table 6 and Fig. 2.

**Table 5**

| | Test Piece No. | | | |
|---|---|---|---|---|
| Component | 8-1 | 8-2 | 8-3 | 8-4 |
| Polyazomethine⁽¹⁾ | 42.0 | 39.9 | 37.8 | 33.6 |
| Nylon 6⁽¹⁾ | 18.0 | 17.1 | 16.2 | 14.4 |
| Carbon Fibers⁽¹⁾ | 0.0 | 3.0 | 6.0 | 9.0 |
| Percentage of CF⁽²⁾ | 0.0 | 5.26 | 11.11 | 18.75 |

| | | | | |
|---|---|---|---|---|
| Note (1) Unit: g. | | | | |
| (2) Parts by weight of the carbon fibers per the total amount (100 parts by weight) of liquid crystal polyazomethine and nylon 6. | | | | |

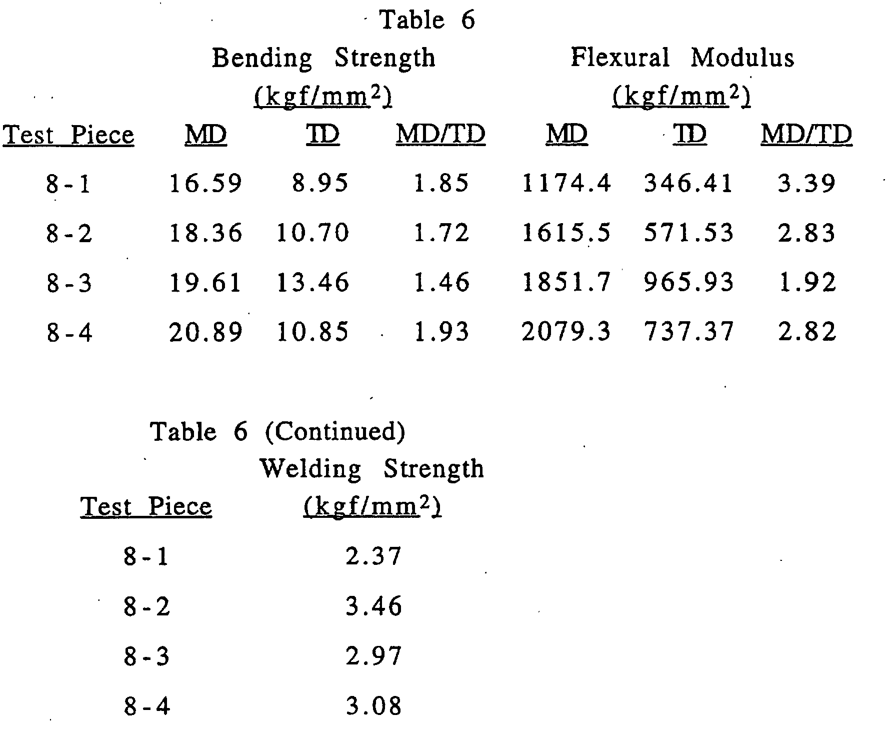

As is clear from Table 6, the composite materials tend to have higher bending strength and flexural modulus as well as a smaller anisotropy (MD/TD) by the addition of the carbon fibers as an inorganic filler. Also, as the amount of the inorganic filler added increases, the welding strength of the composite material tends to increase.

### Example 9

Flat test pieces of 40 mm x 40 mm x 1.5 mm were injection-molded in the same manner as in Example 7 except for adding potassium titanate whisker-reinforced nylon 6 ("Poticon NT18N," available from Ohtsuka Kagaku K.K., potassium titanate whisker content: 40 weight %, nylon 6 content: 60 weight %) as an inorganic filler. Test pieces shown in Fig. 1 were cut from the flat test pieces to measure a welding strength. The percentages of the components in the composite material and the measured welding strength are shown in Table 7. As the amount of the potassium titanate whisker added increased, the welding strength of the composite material increased.

**Table 7**

| | Test Piece No. | | | |
|---|---|---|---|---|
| Component | 9-1 | 9-2 | 9-3 | 9-4 |
| Polyazomethine⁽¹⁾ | 42.0 | 37.8 | 33.6 | 29.4 |
| Nylon 6⁽¹⁾ | 18.0 | 16.2 | 14.4 | 12.6 |
| Potassium Titanate Whisker⁽¹⁾ | 0.0 | 6.0 | 12.0 | 18.0 |
| Percentage of Whisker⁽²⁾ | 0.0 | 11.11 | 25.00 | 42.86 |
| Welding Strength (kgf/mm²) | 2.37 | 2.96 | 2.95 | 3.33 |

| | | | | |
|---|---|---|---|---|
| Note (1) Unit: g. | | | | |
| (2) Parts by weight of the potassium titanate whisker per the total amount (100 parts by weight) of liquid crystal polyazomethine and nylon 6. | | | | |

### Example 10

37.8 g (70 weight %) of a liquid crystal polyazomethine ("TU-100," available from Toto Kagaku Kogyo, K.K.) was dry-blended with 16.2 g (30 weight %) of nylon 6 ("1022B," available from Ube Industries, Ltd.), and charged into a chamber of a laboratory-type twin-screw plasto-mill (available from Toyo Seiki K.K.) rotating at 100 rpm to carry out melt blending at 270°C for T₁ minutes (0, 5, 10 and 15 minutes, respectively). Next, glass fibers ("CS 3PE-324," available from Nitto Boseki Co., Ltd.) in an amount of 6 g [11.1 parts by weight per the total amount (100 parts by weight) of the liquid crystal polyazomethine and nylon 6] was added to the blend and melt-blended at 270°C for T2 minutes. T₁ + T₂ was 20 minutes. Accordingly, the blending time T₂ after the addition of the glass fibers was 20, 15, 10 and 5 minutes, respectively. The melt-blended resin composition was withdrawn from the laboratory-type twin-screw plasto-mill and injection-molded to provide flat test pieces of 40 mm x 40 mm x 1.5 mm by a manual-type simple injection molding machine.

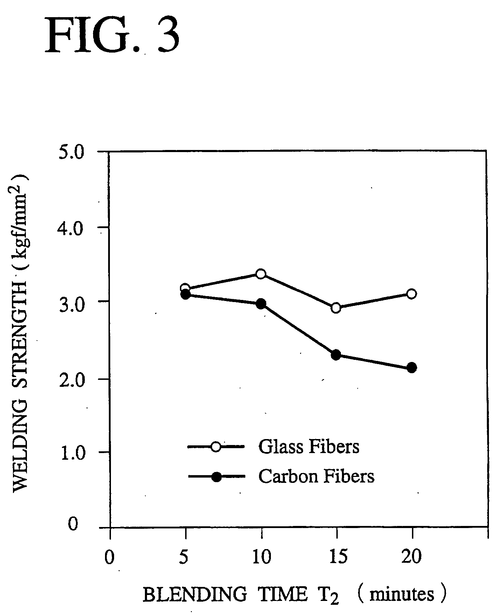

Three-point bending test was conducted using an autograph on each flat test piece to measure a bending strength and a flexural modulus thereof in both injection direction (MD) and transverse direction (TD). The bending test results are shown in Table 8. Also, test pieces shown in Fig. 1 were cut from the flat test pieces to measure a welding strength. The measurement results are shown in Table 8 and Fig. 3.

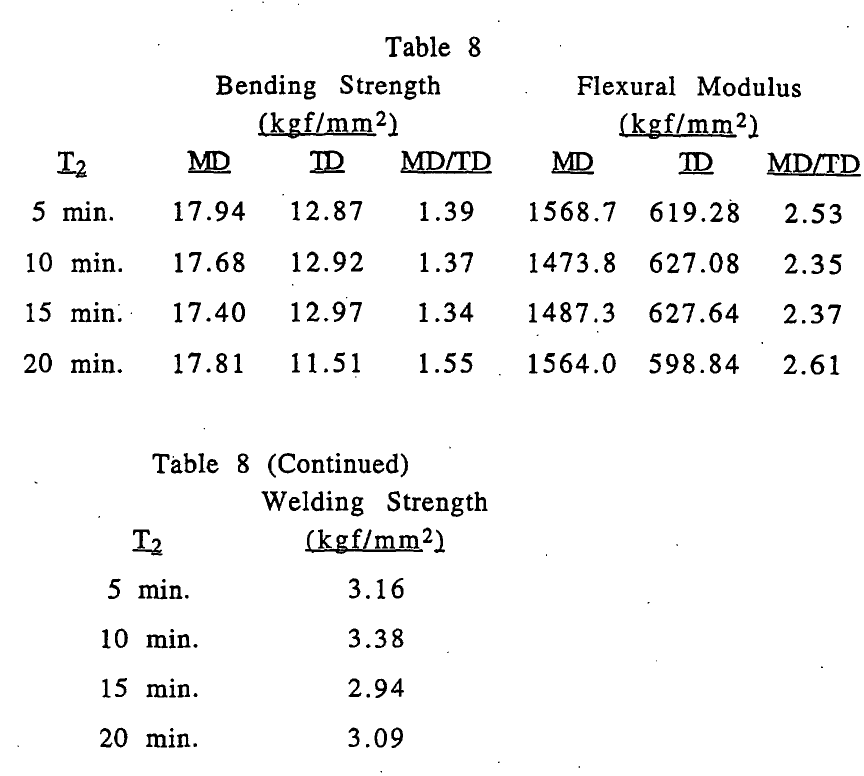

As is clear from Table 8 and Fig. 3, as long as the blending time T₂ was within 5 to 20 minutes after the addition of the glass fibers, there was no large change in bending strength and flexural modulus, and there was substantially no change in anisotropy (MD/TD) and welding strength.

### Example 11

Flat test pieces of 40 mm x 40 mm x 1.5 mm were injection-molded in the same manner as in Example 10 except for adding carbon fibers (Toreca T010, available from Toray Industries, Inc.) as an inorganic filler. Three-point bending test was conducted using an autograph on each flat test piece to measure a bending strength and a flexural modulus thereof in both injection direction (MD) and transverse direction (TD). The bending test results are shown in Table 9. Also, test pieces shown in Fig. 1 were cut from the flat test pieces to measure a welding strength. The measurement results are shown in Table 9 and Fig. 3.

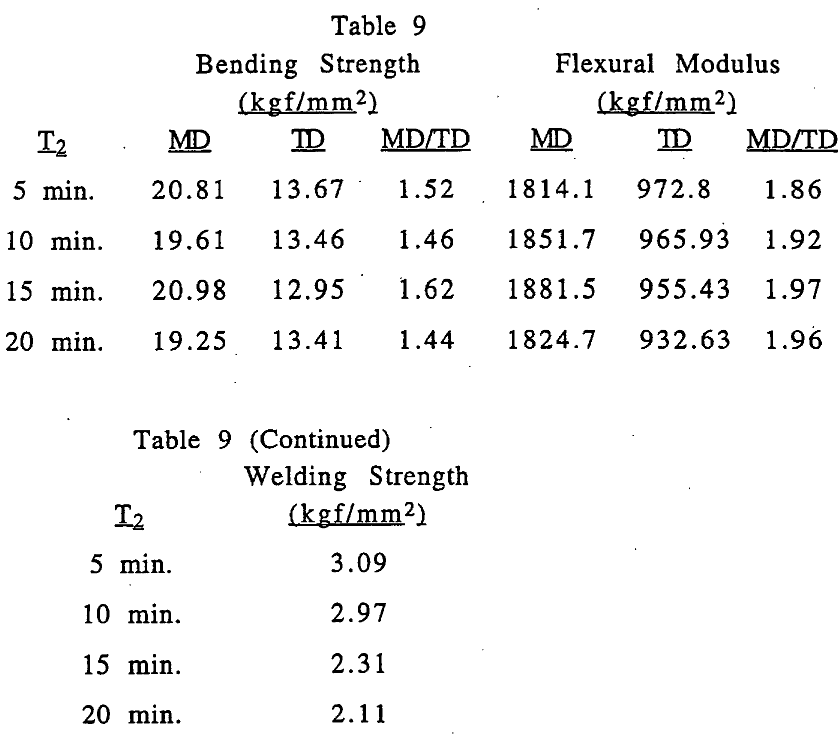

As is clear from Table 9 and Fig. 3, as long as the blending time T₂ was within 5 to 20 minutes after the addition of the carbon fibers, there was substantially no change in bending strength, flexural modulus and their anisotropy (MD/TD), and the welding strength was slightly lowered as the blending time T₂ increased.

### Example 12

Flat test pieces of 40 mm x 40 mm x 1.5 mm were injection-molded in the same manner as in Example 10 except for adding potassium titanate whisker ("TISMO-D," available from Ohtsuka Kagaku K.K.) as an inorganic filler. Three-point bending test was conducted using an autograph on each flat test piece to measure a bending strength and a flexural modulus thereof in both injection direction (MD) and transverse direction (TD). The bending test results are shown in Table 10.

**Table 10**

| | Bending Strength (kgf/mm²) | | | Flexural Modulus (kgf/mm²) | | |
|---|---|---|---|---|---|---|
| T₂ | MD | TD | MD/TD | MD | TD | MD/TD |
| 5 min. | 18.96 | 10.95 | 1.73 | 1478.9 | 484.96 | 3.05 |
| 10 min. | 18.32 | 10.23 | 1.80 | 1461.8 | 505.02 | 2.89 |
| 15 min. | 16.09 | 11.02 | 1.46 | 1312.9 | 503.23 | 2.61 |
| 20 min. | 15.57 | 9.90 | 1.57 | 1276.5 | 506.79 | 2.52 |

As is clear from Table 10, as the blending time T₂ increased from 5 minutes to 20 minutes after the addition of the potassium titanate whisker, the anisotropy (MD/TD) was slightly lowered.

As described in detail above, by blending a composite material of a liquid crystal polyazomethine or copolyazomethine and a polyamide with an inorganic filler, the composite material can be provided with reduced anisotropy and improved welding strength, without lowering its excellent mechanical strength. Composite materials with such properties can be used for wide applications such as automobile parts, aircraft parts, spacecraft parts, etc.

## Claims

1. A composite material comprising
(a) a liquid crystal polyazomethine or copolyazomethine having an average molecular weight of 3000-100000 and a logarithmic viscosity number of 0.5-2.5 dl/g at 30°C in sulfuric acid,
(b) a polyamide having an average molecular weight of 5000-100000, and
(c) an inorganic filler having an average diameter of 1-10 µm in the form of fiber or an average diameter of 3-10 µm in the form of powder,
wherein the weight ratio of said liquid crystal polyazomethine or copolyazomethine to said polyamide is 10:90-90:10, and the amount of said inorganic filler is 5-15 parts by weight per the total amount (100 parts by weight) of said liquid crystal polyazomethine or copolyazomethine and said polyamide.

2. The composite material according to claim 1, wherein said polyamide is at least one selected from the group consisting of aliphatic, aromatic or partly aromatic polyamides or copolyamides.

3. The composite material according to claim 1 or 2, wherein said polyamide is nylon.

4. The composite material according to any one of claims 1-3, wherein said inorganic filler is at least one selected from the group consisting of glass fibers, carbon fibers, potassium titanate whisker, talc, mica and wollastonite.

5. The composite material according to any one of claims 1-4 wherein said liquid crystal polyazomethine or copolyazomethine and said polyamide are melt-blended in the presence of said inorganic filler at a temperature equal to or higher than a higher melting point between those of both polymers and lower than a lower decomposition temperature between those of both polymers, for 0.5-60 minutes.

## Patentansprüche

1. Zusammengesetztes Material umfassend
(a) ein Flüssigkristallpolyazomethin oder -copolyazomethin mit einem durchschnittlichen Molekulargewicht von 3000 bis 100000 und einer logarithmischen Viskositätszahl von 0,5 bis 2,5 dl/g bei 30°C in Schwefelsäure,
(b) ein Polyamid mit einem durchschnittlichen Molekulargewicht von 5000 bis 100000, und
(c) ein anorganisches Füllmittel mit einem durchschnittlichen Durchmesser von 1-10 µm in Form von Fasern oder mit einem mittleren Durchmesser von 3-10 µm in Pulverform,
worin das Gewichtsverhältnis von diesem Flüssigkristallpolyazomethin oder -copolyazomethin zu dem Polyamid 10:90 bis 90:10 ist, und die Menge an anorganischem Füllmittel 5-15 Gewichtsteile pro Gesamtmenge (100 Gewichtsteile) des Flüssigkristallpolyazomethins oder -copolyazomethins und des Polyamids ist.

2. Zusammengesetztes Material nach Anspruch 1,
worin das Polyamid zumindest eines ausgewählt aus der Gruppe, enthaltend aliphatische, aromatische oder teilweise aromatische Polyamide oder Copolyamide, ist.

3. Zusammengesetztes Material nach Anspruch 1 oder 2,
worin das Polyamid Nylon ist.

4. Zusammengesetztes Material nach einem der Ansprüche 1 bis 3,
worin das anorganische Füllmittel mindestens eines ausgewählt aus der Gruppe, enthaltend Glasfasern, Kohlenstofffasern, Kaliumtitanat-Whisker, Talk, Glimmer und Wollastonit, ist.

5. Zusammengesetztes Material nach einem der Ansprüche 1 bis 4,
worin das Flüssigkristallpolyazomethin oder -copolyazomethin und das Polyamid in Anwesenheit des anorganischen Füllmittels bei einer Temperatur gleich oder höher als ein höherer Schmelzpunkt zwischen jenen beider Polymere und niedriger als eine niedrigere Zersetzungstemperatur zwischen jenen beider Polymere, für 0,5 bis 60 Min. schmelzgemischt sind.

## Revendications

1. Matériau composite comprenant :
(a) une polyazométhine ou copolyazométhine à structure de cristaux liquides dont le poids moléculaire moyen est compris entre 3000 et 100000 et l'indice logarithmique de viscosité est compris entre 0,5 et 2,5 dl/g à 30°C dans l'acide sulfurique,
(b) un polyamide dont le poids moléculaire moyen est compris entre 5000 et 100000, et
(c) une charge inorganique dont le diamètre moyen est compris entre 1 et 10 µm sous la forme de fibre ou entre 3 et 10 µm sous la forme de poudre,
dans lequel le rapport en poids de ladite polyazométhine ou copolyazométhine à structure de cristaux liquides audit polyamide est de 10:90 à 90:10 et la quantité de ladite charge inorganique est de 5 à 15 parties en poids par rapport à la quantité totale (100 parties en poids) de ladite polyazométhine ou copolyazométhine à structure de cristaux liquides et dudit polyamide.

2. Matériau composite selon la revendication 1, dans lequel ledit polyamide est au moins un polyamide sélectionné dans le groupe comprenant les polyamides ou copolyamides aliphatiques, aromatiques ou partiellement aromatiques.

3. Matériau composite selon la revendication 1 ou 2, dans lequel ledit polyamide est le nylon.

4. Matériau composite selon l'une quelconque des revendications 1 à 3, dans lequel ladite charge inorganique est au moins une charge sélectionnée dans le groupe comprenant les fibres de verre, les fibres de carbone, la trichite de titanate de potassium, la stéatite, le mica et la wollastonite.

5. Matériau composite selon l'une quelconque des revendications 1 à 4, dans lequel ladite polyazométhine ou copolyazométhine à structure de cristaux liquides et ledit polyamide sont mélangés à l'état fondu, en présence de ladite charge inorganique, à une température supérieure ou égale au point de fusion le plus élevé de ces deux polymères et inférieure à la température de décomposition la plus basse de ces deux polymères, pendant de 0,5 à 60 minutes.
